# EUROPÄISCHE PATENTSCHRIFT

(11) **EP 1 716 346 B1**
(45) Veröffentlichungstag und Bekanntmachung des Hinweises auf die Patenterteilung: **05.03.2008**
(21) Anmeldenummer: 04712464.9
(22) Anmeldetag: 19.02.2004
(51) Int. Cl.: F16D 3/06, F16D 1/104

(54) **VERZAHNUNGSPROFIL EINER KEILWELLE**
TOOTH PROFILE OF A SPLINE SHAFT
PROFIL DE DENT D'UN ARBRE CANNELE

(43) Veröffentlichungstag der Anmeldung: 02.11.2006
(73) Patentinhaber: ERNST GROB AG, CH-8708 Männedorf (CH)
(72) Erfinder: STEINRISSER, Niculo, CH-8708 Männedorf (CH)
(74) Vertreter: Kemény AG Patentanwaltbüro
(86) Internationale Anmeldenummer: PCT/CH2004/000089
(87) Internationale Veröffentlichungsnummer: WO 2005/080815

(56) Entgegenhaltungen:
- US-A- 3 364 768
- US-A- 5 180 043
- US-A- 5 243 874
- US-A- 5 720 102

## Beschreibung

Die vorliegende Erfindung betrifft ein Verzahnungsprofil nach dem Oberbegriff von Anspruch 1.

Für die formschlüssige Verbindung einer Nabe mit einer Welle werden häufig Pass- oder Gleitfederverbindungen eingesetzt. Wenn grosse Drehmomente zu übertragen sind und eine Verschiebung zwischen Nabe und Welle ermöglicht werden soll, wird häufig ein Vielnut-Profil resp. eine Keilwelle eingesetzt.

Die Nuten weisen dabei häufig entweder ein Rechteck- oder ein Trapezförmiges Profil auf. Die Profile werden dabei entweder in spanender Bearbeitung oder durch Kaltumformung hergestellt, wie beispielsweise durch Schlagwalzverfahren. Gegenüber der spanenden Bearbeitung hat das Kaltumformen vor allem den Vorteil der grösseren Wirtschaftlichkeit bei hohen zu produzierenden Stückzahlen.

Gerade bei der Kaltumformung bei der Herstellung von derartigen Profilen ist eine Reihe von Parametern für die Genauigkeit des Profils von entscheidender Bedeutung. Dies sind insbesondere der Durchmesser, die Zahndicke, die Teilung, die Nut- resp. Zahnflankenform und -richtung, die Ovalität des Werkstückes etc. Die Passungen dieser einzelnen Parameter kumulieren sich schliesslich zu Passungsfehlern zwischen Nabe und Welle, welche für eine wirksame Verbindung zwischen Nabe und Welle von Bedeutung sind. Diese Passungen sind daher mit ausreichendem Spiel auszulegen, um überhaupt eine Verbindung zu ermöglichen.

Dieses notwendige Spiel führt nun aber zu einer Reduktion der Qualität der Paarung zwischen Nabe und Welle, was sich je nach Parameter und Verwendungszweck der Verbindung negativ auswirkt. Häufig können aufgrund der Inhomogenitäten des Rohmaterials bei der nachfolgenden Kaltumformung die Anforderungen an die Qualität dieser Werkstücke nur bedingt erfüllt werden.

Diese Problematik kann bei Kupplungslamellenträgern für automatische Fahrzeuggetriebe oder beispielsweise ausgeprägt bei der Herstellung von Gelenkwellen-Teleskoprohren auftreten, welche beispielsweise im Fahrzeugbau in grossen Stückzahlen verwendet werden. Dabei werden jeweils ein Innen- und ein Aussenrohr mit entsprechender Profilierung auf der Innen- resp. Aussenseite verwendet. Aufgrund der hohen Stückzahlen ist für eine wirtschaftliche Produktion das Kaltumformverfahren von grossem Interesse, aber bedingt durch die hohe Rotationsgeschwindigkeit von Gelenkwellen-Teleskoprohren im Betrieb werden sehr hohe Anforderungen an die Genauigkeit der Profilverbindung zwischen Innen- und Aussenrohr gestellt.

Bei der Verwendung von herkömmlichen Profilen entsteht zwischen den beiden Rohren, bedingt durch die in der Regel grossen Profillänge, ein Knickspiel, welches im Betrieb zu nicht akzeptablen radialen Bewegungen der Gelenkwelle führen kann, welche bis zur Zerstörung der Gelenkwelle bei hohen Belastungen und Drehzahlen führen kann. Das Knickspiel wird durch das Radialspiel zwischen dem Profil des Innen- und des Aussenrohres verursacht.

In US 5,243,874 und US 5,720,102, die eine Grundlage für den Oberbegriff des Anspruchs 1 bildet, sind längsverschiebbare Wellen-Naben Verbindungen mit Nutverzahnung dargestellt, bei welchen zur Verringerung des radialen Spiels der Nutverzahnung der Hohlraum der Nutverzahnung zwischen Welle und Nabe mit einer Zwischenschicht ausgefüllt wird, die beispielsweise als auf eine der Verzahnungsseiten aufgebrachte reibungsarme Schicht ausgeführt wird.

Die Aufgabe der vorliegenden Erfindung bestand darin, ein Verzahnungsprofil für Antriebskomponenten, insbesondere für gegeneinander verschiebbar ausgebildete Gelenkwellen, zu finden, bei welchen das Radialspiel minimiert oder gar eliminiert ist.

Diese Aufgabe wird erfindungsgemäss durch ein Verzahnungsprofil mit den Merkmalen nach Anspruch 1 gelöst. Weitere, erfindungsgemäss bevorzugte Ausführungen ergeben sich aus den Merkmalen der weiteren Ansprüche 2 bis 6.

Das erfindungsgemässe Nutprofil für eine formschlüssige Naben-Wellen-Verbindung mit einem im Wesentlichen rechteckigen oder trapezförmigen Nutquerschnitt weist am Nutboden oder am Nutkopf entweder der Nabe oder der Welle mindestens eine radial nach Aussen vorstehende Rippe auf, welche einstückig aus dem Material des Nutbodens (5) oder des Nutkopfes (4) gebildet ist. Damit entsteht in radialer Richtung in Bezug auf die Längsachse der Nabe resp. der Welle eine Linien.

Flächen-Auflage. Eine derartige Auflage kann vorteilhaft mit wenig Spiel oder gar spielfrei ausgeführt werden.

Vorzugsweise weist jeder Nutboden oder jeder Nutkopf der Nabe oder der Welle mindestens eine Rippe auf. Damit wird entlang des gesamten Umfanges eine definierte Verbindung der Profile zwischen Nabe und Welle erreicht und eine exakte radiale Positionierung der Welle in der Nabe erreicht.

Vorzugsweise ist die Rippe parallel zur Flanke der Nut verlaufend ausgebildet, vorzugsweise entlang der gesamten Länge des entsprechenden Nutbodens resp. Nutkopfes. Gerade bei grossen Verzahnungslängen, wie sie bei Teleskoprohren auftreten, wird damit eine präzise radiale Linien-Flächen-Verbindung zwischen den Nuten der Nabe und der Welle erzielt, resp. des Innen- und des Aussenrohres.

Vorzugsweise weist die Rippe einen nach Aussen verjüngenden, trapezförmigen Querschnitt auf. Eine derartige Form ist durch Kaltumformung einfach herzustellen und weist eine hohe Formstabilität auf. Vorzugsweise weist die Rippe eine maximale Breite von 50%, vorzugsweise 25%, der Breite des entsprechenden Nutbodens resp. -kopfes auf. Je schmäler die Rippe ausgebildet ist, umso kleiner wird die Auflagefläche des Rippenkopfes auf der entsprechenden Fläche des gegenüberliegenden Nutbodens resp. -kopfes. Damit lassen sich genaue geometrische Bedingungen auch über grössere Profillängen erzielen.

Vorzugsweise ist der Radius der Auflagefläche der Rippe zum gegenüberliegenden Nutboden resp. -kopf in Bezug auf die Längsachse der Nabe resp. Welle spielfrei oder mit Vorspannung ausgebildet. Das radiale Spiel zwischen der Nabe und der Welle kann somit praktisch vollkommen aufgehoben werden. Weiter hat sich gezeigt, dass sogar eine Vorspannung aufgebaut werden kann, d.h. der Radius der Auflagefläche der Rippe ist grösser als der Radius der gegenüberliegenden Nutbodens resp. -kopfes, wenn die Rippen auf dem Nabenprofil ausgebildet sind. Dies eignet sich insbesondere bei dünnwandigen Hohlprofilen, wobei entweder die Nabe oder die Welle oder beide Teile als Hohlprofile ausgebildet sind. Weiter können damit vorteilhaft auch bedingt durch Inhomogenitäten des Materials gerade bei Hohlprofilen auftretende Ovalität des Querschnitts ausgeglichen werden.

Vorzugsweise sind jeweils in einem Nutboden resp. Nutkopf mindestens zwei parallel zueinander angeordnete Rippen ausgebildet. Entsprechend der Dimensionen der Profile und der Abmessungen von Nabe und Welle sowie der zu übertragenden Kräfte und Rotationsgeschwindigkeiten kann es vorteilhaft sein, mehr als eine Rippe vorzusehen.

Die neben der resp. den Rippen gebildeten Taschen zwischen den radial gegenüberliegenden Flächen der Profilböden resp. -köpfen haben sich weiter als von grossem Vorteil für die Verteilung von Schmiermittel im Zwischenraum der Profile erwiesen.

Die Aufgabe wird weiter durch ein Teleskoprohr für Gelenkwellen mit einem Innenrohr und einem Aussenrohr gelöst, bei welchem das Innenrohr oder das Aussenrohr ein Nutprofil nach einem der Ansprüche 1 bis 6 aufweisen.

Vorzugsweise sind dabei das Innerohr und das Aussenrohr als Hohlkörper mit annähernd gleichmässiger Profildicke ausgebildet. Derartige Gelenkwellen eignen sich besonders gut für den Einsatz in Kraftfahrzeugen zur Kraftübertragung vom Motor auf die Antriebsachsen resp. -räder.

Weiter wird erfindungsgemäss ein Verfahren zur Herstellung eines Nutprofils nach einem der Ansprüche 1 bis 6 im Kaltwalzverfahren vorgeschlagen, bei welchem eine oder mehrere Profilrollen oder Profilwalzen in Übereinstimmung mit dem zur Profilierung notwendigen, innerhalb des Hohlteiles befindlichen Profildornes mit entsprechend der Rippe ausgebildetem Profil in Eingriff mit der Oberfläche der Nabe oder Welle gebracht werden. Damit kann vorteilhaft die Rippe in einem Arbeitsgang zusammen mit der Ausbildung der Nuten hergestellt werden.

Vorzugsweise werden die Profilrollen resp. Profilwalzen in periodisch, schlagenden Eingriff gebracht. Durch dieses Schlagwalzverfahren können besonders präzise Profilierungen erzeugt werden.

Ein Ausführungsbeispiel der vorliegenden Erfindung wird nachstehend anhand von Zeichnungen noch näher erläutert. Es zeigen
Fig. 1 den Querschnitt durch ein Teleskoprohr mit erfindungsgemässem Nutprofil;
Fig. 2 den Querschnitt durch einen Ausschnitt einer erfindungsgemäss ausgebildeten Nut von Figur 1;
Fig. 3 den Querschnitt eines Ausschnittes einer alternativen Ausführungsvariante eines Teleskoprohres;
Fig. 4 den Querschnitt eines Ausschnittes einer weiteren alternativen Ausführungsvariante eines Teleskoprohres;
Fig. 5 den Querschnitt durch einen Ausschnitt gemäss Figur 2 mit einer alternativen Ausbildung der erfindungsgemässen Nut.

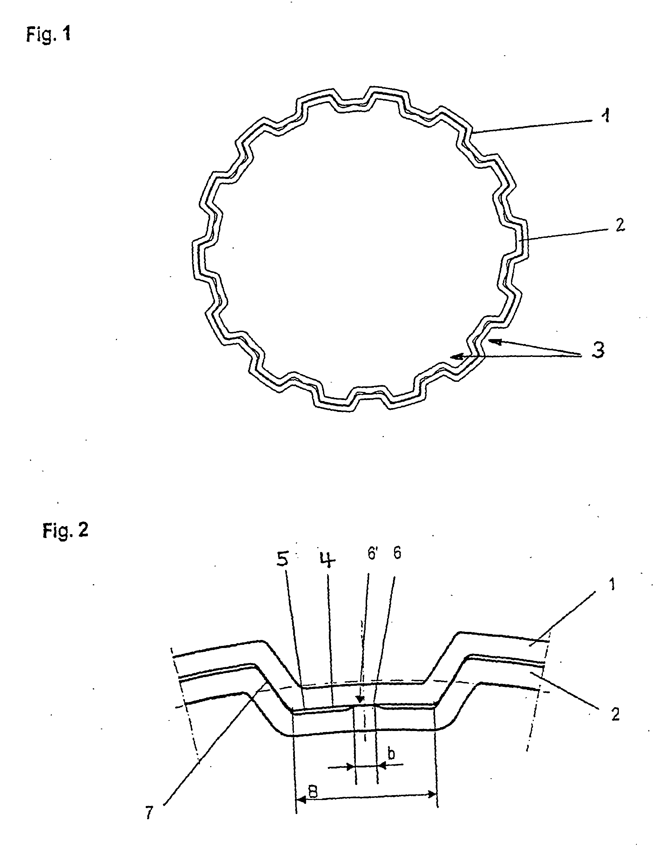

In Figur 1 ist der Querschnitt durch das als Hohlprofil ausgebildete Aussenrohr 1 und Innenrohr 2 eines Teleskoprohres dargestellt, wie es beispielsweise im Fahrzeugbau Verwendung findet. Dabei weist sowohl das Aussenrohr 1 wie auch das Innenrohr 2 eine gleichmässig entlang des Umfanges angeordnete Profilierung mit einen trapezförmigen Querschnitt aufweisenden Nuten 3 auf.

In Figur 2 ist detaillierter der Ausschnitt eine einzelnen Nutprofils des Teleskoprohres nach Figur 1 dargestellt. Das Aussenrohr 1 weist dabei eine nach Innen ausgebildete, trapezförmige Nut 3 mit einem zur Innenseite gerichteten Nutkopf 4 auf. Der Nutkopf 4 weist eine in Bezug auf die Längsachse des Teleskoprohres zylindrische Fläche auf. Das Innenrohr weist eine entsprechend ausgebildete Nut 3 mit zur Aussenseite gerichtetem Nutboden 5 auf. Der Nutboden 5 weist ebenfalls eine zylindrische Fläche analog zum Nutkopf 4 auf.

Im Nutboden 5 ist nun eine radial nach Aussen vorstehende Rippe 6 ausgebildet. Die Stirnfläche 6' der Rippe 6 liegt in diesem Beispiel in der Mitte des Nutkopfes 4 des Aussenrohres vorteilhaft ohne Spiel auf. Durch die geringe Auflagebreite b im Verhältnis zur Nutbreite B des Nutkopfes 4 wird praktisch eine Punkt-zu-Fläche resp. in Berücksichtigung der Längsausdehnung der Nuten 3 eine Linie-zu-Fläche Verbindung geschaffen. Weiter erlaubt die geringe Breite b der Rippe 6 eine präzise Herstellung unter Einhaltung geringster Toleranzen auch bei Kaltumformverfahren, was eine spielfreie Auslegung der Paarung überhaupt erst erlaubt.

Die jeweils einander zugewandten Flanken 7 der Nuten 3 des Aussenrohres 1 und des Innenrohres 2 weisen untereinander vorteilhaft ein kleines Spiel auf, um Ungenauigkeiten des Flankenwinkels und der Teilung der Nuten bei der Fertigung des Nutprofils auszugleichen und eine Paarung von Aussenrohr 1 und Innenrohr 2 zu ermöglichen. Das Spiel kann beispielsweise bei einem durchschnittlichen Rohrdurchmesser von 100 mm und einer Wanddicke von 2 mm ca. 0,05 mm betragen. Derartige Werte sind durch Kaltumformverfahren erzielbar.

Wenn nun vorteilhaft jeder Nutboden 5 jeder Nut 3 des Innenrohrs 2 eine derartige Rippe 6 aufweist, kann damit das Radialspiel der Verbindung zwischen Aussenrohr 1 und Innenrohr 2 vorteilhaft vollständig aufgehoben werden. Damit wir auch zuverlässig das bei derartigen Teleskoprohren schädliche Knickspiel aufgehoben.

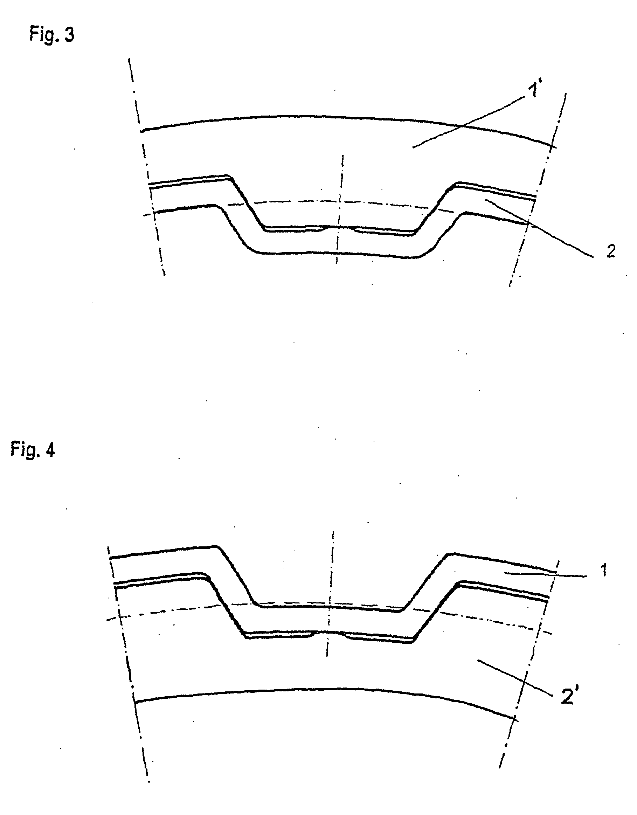

In den Figuren 3 und 4 sind weitere Ausführungsbeispiele des erfindungsgemässen Nutprofils mit Rippe 6 an dickwandigen Rohrprofilen 1' resp. 2' dargestellt. Es ist klar, dass auch eine Kombination von zwei dickwandigen Rohrprofilen 1' und 2' denkbar ist, wie auch ein Vollprofil als Innenrohr 2 eingesetzt werden kann.

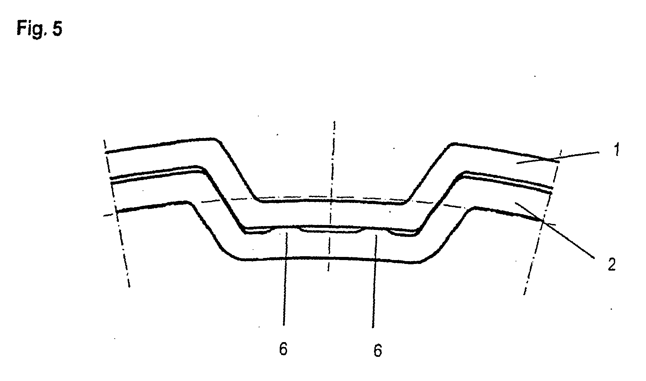

In Figur 5 ist noch eine weitere alternative Ausführungsform des erfindungsgemässen Nutprofils dargestellt, wobei hier zwei parallel zueinander liegende Rippen 6 im Nutboden 5 ausgebildet sind. Es hat sich im Übrigen gezeigt, dass die zwischen den Rippen 6 und dem Nutboden 5 resp. dem Nutkopf 4 ausgebildeten Taschen 8 für die Aufnahme und Verteilung von Schmiermitteln bestens geeignet sind und ein im Vergleich zu herkömmlichen Nutprofilen ohne Rippen 6 bessere Schmiereigenschaften aufweisen.

Es ist für den Fachmann ohne weiteres klar, dass die Rippen 6 auch beispielsweise an der Innenseite des Aussenrohres 1 am Nutkopf 4 ausgebildet sein können, und demzufolge nach Innen weisen. Auch können die Rippen 6 jeweils am Nutkopf des Innenrohres 2 resp. dem Nutboden des Aussenrohres 1 angeordnet sein.

Dadurch, dass sich die Rippen 6 in exakten Abmessungen fertigen lassen, kann anstelle der Aufhebung des Spiels zwischen der Stirnfläche 6' der Rippe 6 und dem gegenüberliegenden Nutkopf 4 eine Vorspannung eingestellt werden, indem die Stirnfläche 6' einen grösseren Radius in Bezug auf die Längsachse des Aussenrohres 1 resp. des Innenrohres 2 aufweist als der Radius des Nutkopfes 4. Dies eignet sich ganz besonders für den Einsatz bei dünnwandigen Aussen- (1) resp. Innenrohren (2), wobei dort auch allfällige Ovalitäten, d.h. Abweichungen von der exakten Kreisform, damit ausgeglichen werden können.

## Patentansprüche

1. Nutprofil für eine formschlüssige Naben-Wellen-Verbindung mit einem im Wesentlichen rechteckigen oder trapezförmigen Nutquerschnitt (3), **dadurch gekennzeichnet, dass** der Nutboden (5) oder der Nutkopf (4) entweder der Nabe (1) oder der Welle (2) mindestens eine radial nach Aussen vorstehende Rippe (6) aufweist, welche einstückig aus dem Material des Nutbodens (5) oder des Nutkopfes (4) gebildet ist.

2. Nutprofil nach Anspruch 1, **dadurch gekennzeichnet, dass** jeder Nutboden (5) oder jeder Nutkopf (4) der Nabe (1) oder der Welle (2) mindestens eine Rippe (6) aufweist.

3. Nutprofil nach Anspruch 1 oder 2, **dadurch gekennzeichnet, dass** die Rippe (6) parallel zur Flanke (7) der Nut (3) verlaufend ausgebildet ist, vorzugsweise entlang der gesamten Länge des entsprechenden Nutbodens (5) resp. Nutkopfes (4).

4. Nutprofil nach einem der Ansprüche 1 bis 3, **dadurch gekennzeichnet, dass** die Rippe (6) einen nach Aussen verjüngenden, trapezförmigen Querschnitt aufweist, und eine maximale Breite (b) von 50%, vorzugsweise 25%, der Breite (B) des entsprechenden Nutbodens (5) resp. -kopfes (4) aufweist.

5. Nutprofil nach einem der Ansprüche 1 bis 4, **dadurch gekennzeichnet, dass** der Radius der Auflagefläche der Rippe (6) zum gegenüberliegenden Nutboden (5) resp. -kopf (4) in Bezug auf die Längsachse der Nabe (1) resp. Welle (2) spielfrei oder mit Vorspannung ausgebildet ist.

6. Nutprofil nach einem der Ansprüche 1 bis 5, **dadurch gekennzeichnet, dass** jeweils in einem Nutboden (5) resp. Nutkopf (4) mindestens zwei parallel zueinander angeordnete Rippen (6) ausgebildet sind.

7. Teleskoprohr für Gelenkwellen mit einem Innenrohr (2) und einem Aussenrohr (1), wobei das Innenrohr (2) oder das Aussenrohr (1) ein Nutprofil (3) nach einem der Ansprüche 1 bis 6 aufweisen.

8. Teleskoprohr nach Anspruch 7, **dadurch gekennzeichnet, dass** das Innerohr (2) und das Aussenrohr (1) als Hohlkörper mit annähernd gleichmässiger Profildicke ausgebildet sind.

9. Verfahren zur Herstellung eines Nutprofils (3) nach einem der Ansprüche 1 bis 6 im Kaltwalzverfahren, **dadurch gekennzeichnet, dass** eine oder mehrere Profilrollen oder Profilwalzen in Übereinstimmung mit dem zur Profilierung notwendigen innerhalb des Hohlteiles befindlichen Profildornes mit entsprechend der Rippe (6) ausgebildetem Profil in Eingriff mit der Oberfläche der Nabe (1) oder Welle (2) gebracht werden.

10. Verfahren nach Anspruch 9, **dadurch gekennzeichnet, dass** die Profilrollen resp. Profilwalzen in periodisch, schlagenden Eingriff gebracht werden.

## Claims

1. Groove profile for a positive hub/shaft connection with a substantially rectangular or trapezoidal groove cross-section (3), **characterised in that** the groove base (5) or the groove head (4) either of the hub (1) or the shaft (2) has at least one radially outwardly projecting rib (6), which is formed in one piece from the material of the groove base (5) or the groove head (4).

2. Groove profile according to claim 1, **characterised in that** each groove base (5) or each groove head (4) of the hub (1) or the shaft (2) has at least one rib (6).

3. Groove profile according to claim 1 or 2, **characterised in that** the rib (6) is configured to run parallel to the flank (7) of the groove (3), preferably along the entire length of the corresponding groove base (5) or groove head (4).

4. Groove profile according to any one of claims 1 to 3, **characterised in that** the rib (6) has an outwardly tapering, trapezoidal cross-section, and has a maximum width (b) of 50%, preferably 25%, of the width (B) of the corresponding groove base (5) or groove head (4).

5. Groove profile according to any one of claims 1 to 4, **characterised in that** the radius of the support face of the rib (6) to the opposing groove base (5) or groove head (4) is configured so as to be free of play or with prestressing in relation to the longitudinal axis of the hub (1) or shaft (2).

6. Groove profile according to any one of claims 1 to 5, **characterised in that** at least two ribs (6) arranged parallel to one another are formed in a groove base (5) or groove head (4), in each case.

7. Telescopic tube for drive shafts with an inner tube (2) and an outer tube (1), wherein the inner tube (2) or the outer tube (1) have a groove profile (3), according to any one of claims 1 to 6.

8. Telescopic tube according to claim 7, **characterised in that** the inner tube (2) and the outer tube (1) are configured as hollow bodies with an approximately uniform profile thickness.

9. Method for producing a groove profile (3) according to any one of claims 1 to 6 by the cold rolling method, **characterised in that** one or more profile rolls or profile rollers are brought into engagement with the surface of the hub (1) or shaft (2) to coincide with the profile mandrel which is necessary for profiling, is located inside the hollow part and has a profile configured so as to correspond with the rib (6).

10. Method according to claim 9, **characterised in that** the profile rolls or profile rollers are brought into periodic, impacting engagement.

## Revendications

1. Profil de rainure pour une liaison moyeu-arbre par complémentarité de forme comprenant une rainure en coupe (3) sensiblement rectangulaire ou trapézoïdale,
**caractérisé en ce que**
le fond de rainure (5) ou la tête de rainure (4), soit du moyeu (1), soit de l'arbre (2) présente au moins une nervure (6) dépassant radialement vers l'extérieur et qui est formée d'une seule pièce à partir du matériau du fond de rainure (5) ou de la tête de rainure (4).

2. Profil de rainure selon la revendication 1,
**caractérisé en ce que**;
chaque fond de rainure (5) ou chaque tête de rainure (4) du moyeu (1) ou de l'arbre (2) présente au moins une nervure (6).

3. Profil de rainure selon la revendication 1 ou 2,
**caractérisé en ce que**
la nervure (6) s'étend parallèlement au flanc (7) de la rainure (3), de préférence sur toute la longueur du fond de rainure (5) ou de la tête de rainure (4) correspondant(e).

4. Profil de rainure selon l'une des revendications 1 à 3,
**caractérisé en ce que**
la nervure (6) présente une coupe trapézoïdale diminuant vers l'extérieur, et une largeur maximale (b) de 50 %, de préférence 25 %, de la largeur (B) du fond (5) ou de la tête (4) de rainure correspondant(e).

5. Profil de rainure selon l'une des revendications 1 à 4,
**caractérisé en ce que**
le rayon de la surface d'appui de la nervure (6) vers le fond (5) ou la tête (4) de rainure situé(e) à l'opposé par rapport à l'axe longitudinal du moyeu (1) ou de l'arbre (2) n'a pas de jeu ou bien est réalisé avec une précontrainte.

6. Profil de rainure selon l'une des revendications 1 à 5,
**caractérisé en ce que**,
dans un fond (5) ou une tête (4) de rainure, au moins deux nervures (6) sont à chaque fois disposées parallèlement l'une par rapport à l'autre.

7. Tube télescopique pour arbres de transmission comprenant un tube intérieur (2) et un tube extérieur (1),
le tube intérieur (2) ou le tube extérieur (1) présentant un profil de rainure (3) selon l'une des revendications 1 à 6.

8. Tube télescopique selon la revendication 7,
**caractérisé en ce que**
le tube intérieur (2) et le tube extérieur (1) ont la forme de corps creux avec un profil d'épaisseur presque uniforme.

9. Procédé de fabrication d'un profil de rainure (3) selon l'une des revendications 1 à 6 au moyen d'un procède de roulage à froid,
**caractérisé en ce qu'**
un ou plusieurs rouleau(x) de profilage ou cylindre(s) de profilage ajusté(s) à la broche de profilage nécessaire au profilage et se trouvant à l'intérieur de la partie creuse, avec un profil correspondant à la nervure (6), est (sont) engrené(s) avec la surface du moyeu (1) ou de l'arbre (2).

10. Procédé selon la revendication 9,
**caractérisé en ce que**
les rouleaux de profilage ou cylindres de profilage sont engrenés périodiquement et par battement.
